**Europäisches Patentamt**

**European Patent Office**

**Office européen des brevets**

(19)

(11) Veröffentlichungsnummer : **0 406 231 B1**

(12)

# EUROPÄISCHE PATENTSCHRIFT

(45) Veröffentlichungstag der Patentschrift :
08.07.92 Patentblatt 92/28

(51) Int. Cl.$^5$ : **A22C 9/00,** A23B 4/02

(21) Anmeldenummer : **88903158.9**

(22) Anmeldetag : **19.04.88**

(86) Internationale Anmeldenummer :
**PCT/AT88/00022**

(87) Internationale Veröffentlichungsnummer :
**WO 89/08982 05.10.89 Gazette 89/24**

(54) **VERFAHREN ZUM MASSIEREN VON FLEISCHHALTIGEM ODER FLEISCHÄHNLICHEM GUT UND VORRICHTUNG ZUR DURCHFÜHRUNG DES VERFAHRENS.**

(30) Priorität : **24.03.88 AT 794/88**

(43) Veröffentlichungstag der Anmeldung :
**09.01.91 Patentblatt 91/02**

(45) Bekanntmachung des Hinweises auf die
Patenterteilung :
**08.07.92 Patentblatt 92/28**

(84) Benannte Vertragsstaaten :
**CH DE FR GB LI NL SE**

(56) Entgegenhaltungen :
**EP-A- 0 273 843
CH-A- 526 918
DE-A- 2 818 862
FR-A- 2 460 113
GB-A- 374 611
GB-A- 1 232 905
GB-A- 2 085 742**

(73) Patentinhaber : **INJECT STAR
PÖKELMASCHINEN GESELLSCHAFT M.B.H.
Innstrasse 23
A-1201 Wien (AT)**

(72) Erfinder : **PROSENBAUER, Otto
Innstrasse 23
A-1201 Wien (AT)**

(74) Vertreter : **Wildhack, Helmut, Dr. Dipl.-Ing. et al
Patentanwälte Dipl.-Ing. Leo Brauneiss
Dipl.-Ing. Dr. Helmut Wildhack Landstrasser
Hauptstrasse 50 Postfach 281
A-1031 Wien (AT)**

EP 0 406 231 B1

## Beschreibung

Die Erfindung bezieht sich auf eine Vorrichtung zum Massieren von fleischhaltigem oder fleischähnlichem Gut, z.B. Schinken, Einlagen für Würste, Geflügel, Fisch, Fischprodukten usw., mit einer in einem Gestell um eine liegende Achse drehbar gelagerten Trommel und einem Antrieb für diese Drehbewegung, welche Trommel an ihrem einen Stirnende mit einer durch einen Deckel dicht verschließbaren Öffnung zur Ein- oder Ausbringung des Gutes und an ihrer Innenwand mit, insbesondere schraubenlinienförmig verlaufenden, Vorsprüngen versehen ist, welche das Gut bei der Drehbewegung der Trommel mitnehmen, wobei der Deckel mit einem mittigen, mit einer Drehkupplung versehenen Anschluß für eine Leitung zur Erzeugung eines Vakuums bzw. Überdruckes im Innenraum der Trommel und mit Verbindungsgliedern zum druckdichten Verschluß der Öffnung versehen ist.

Es ist bekannt, das zu behandelnde Gut in einer mit geneigter Achse gelagerten rotierenden Trommel zu behandeln, in der das Gut unter Vakuum massiert wird, d.h. das Gut wird bei der Rotation der Trommel mitgenommen und fällt dann wieder zurück (The National Provisioner 21.November 1987, Seite 4). Während dieses Massiervorganges unter Vakuum erfolgt eine Einspritzung flüssiger oder trockener Behandlungssubstanzen. Damit lassen sich Schweinefleisch, Rindfleisch und Geflügelfleisch behandeln, jedoch ist die Aufnahme der Behandlungssubstanzen, insbesondere von Salzlake, nicht völlig befriedigend, es ist das Eiweiß-Wasser-Verhältnis nicht immer optimal und es ist auch die Vielseitigkeit der Anwendbarkeit nicht befriedigend.

Bei einer bekannten Vorrichtung nach dem Oberbegriff des Anspruches 1 (GB-OS 2 085 742) ist an der Stirnseite der Trommel ein Deckel schwenkbar befestigt. Dies hat den Nachteil, daß der Deckel nicht völlig von der Trommel getrennt werden kann, so daß er beim Beschickungs- und Entleerungsvorgang im Weg steht, insbesondere wenn größere Fleischmengen mittels eines Wagens verfahren werden, der nicht mehr von Hand anzuheben ist. In einem solchen Fall kollidiert ein Lift oder eine sonstige Anhebevorrichtung mit dem in der Offenstellung befindlichen Deckel bzw. es ergeben sich zumindest Probleme in der Konstruktion bzw. im Betrieb einer solchen Anhebevorrichtung. Weiters ist nachteilig, daß der Deckel nur unzuverlässig dichtet, wenn in der Trommel Überdruck herrscht. Dieser Überdruck wirkt im Sinne eines Abhebens des Deckels vom Öffnungsrand der Trommel, so daß Druck und gegebenenfalls auch Behandlungsmedium (z.B. Salzlake) aus der Trommel entweichen kann.

Die Erfindung setzt sich zur Aufgabe, diese Nachteile zu vermeiden und eine Vorrichtung der eingangs geschilderten Art so zu verbessern, daß ein druckdichter Verschluß der Guteinbringeöffnung erzielt wird, auch wenn in der Trommel Überdruck herrscht. Außerdem sollen die händischen Arbeitsvorgänge an der Trommel nicht gestört werden. Die Erfindung löst diese Aufgabe dadurch, daß die Verbindungsglieder einen Bajonettverschluß aufweisen, der mit einer Spannvorrichtung kombiniert ist, mit welcher der Rand einer federnd ausgebildeten Deckelscheibe des von der Trommel abnehmbaren Deckels dicht an den Rand der Öffnung anpreßbar ist. Durch diese Deckelausbildung läßt sich die Trommel vergleichsweise leicht und rasch beschicken bzw. entleeren, gegebenenfalls auch mittels eines Beschickungswagens. Der Bajonettverschluß gewährleistet im Zusammenhang mit der Spannvorrichtung einen Betrieb der Trommel mit Vakuum oder Überdruck, auch impulsmäßig wechselnd, bei stets dichtem Verschluß der Trommel.

Gemäß einer besonders einfachen Ausführungsform der Erfindung ist die Anordnung so getroffen, daß die Spannvorrichtung einen am Deckel befestigten Bügel hat, an dem sich Spannschrauben abstützen, die auf den Deckel wirken. Auf diese Weise trägt der Deckel die Abstützung für seine Spannvorrichtung selbst.

Wenn gemäß einer Weiterbildung der Erfindung an der Drehkupplung ein Anschluß für eine Impulsvakuumanlage bzw. eine Überdruckeinrichtung angeordnet ist, dann lassen sich die Druckverhältnisse in der Trommel auch während ihrer Drehung ändern, ohne daß sich die Impulsvakuumanlage bzw. die Überdruckeinrichtung mit der Trommel mitzudrehen brauchen bzw. ohne daß die Anschlußschläuche verwunden werden. Das Gleiche gilt, wenn gemäß einer Weiterbildung der Erfindung der Deckel mit einem Anschluß für eine Begasungsanlage und bzw. oder eine Beeisungsanlage versehen ist, so daß das behandelte Gut mit einem Gas, z.B. $CO_2$ oder Stickstoff oder einem Mischgas, bzw. mit Eis behandelt werden kann. Vorzugsweise ist im Rahmen der Erfindung der Anschluß für die Begasungsanlage bzw. die Beeisungsanlage so ausgebildet, daß er eine in der Drehkupplung mittig angeordnete Lanze aufweist.

Gemäß einer Weiterbildung der Erfindung ist eine Hubvorrichtung für die Anhebung eines Beschickungswagens zur Öffnung der Trommel vorgesehen, welche Hubvorrichtung in ihrer abgesenkten Endlage zumindest im wesentlichen unter dem die Öffnung aufweisenden Mündungsabschnitt der Trommel liegt. Auf diese Weise wird verhindert, daß die Hubvorrichtung Platz verstellt.

Gemäß einer bevorzugten Konstruktion der Erfindung liegt die Achse der Trommel horizontal. Durch schräg angeordnete Vorsprünge an der Innenwand der Trommel ergibt sich bei geeigneter Wahl der Drehrichtung der Trommel eine Förderung des zu behandelnden Gutes in Richtung zum Trommelboden, also von der Einbringeöffnung weg, wobei durch den auf das am Boden liegende Gut ausgeübten Druck dieses Gut im Zen-

2

tralbereich der Trommel wieder nach vorne gefördert wird. Durch die erwähnte Förderwirkung ist es möglich, die Trommel höher zu füllen als bis zum Unterrand der Einbringeöffnung, was sich auf das Chargengewicht vorteilhaft auswirkt. Bei umgekehrter Drehrichtung der Trommel bewirken die schrägen Vorsprünge eine Herausförderung des Gutes aus der Trommel, so daß sich gegenüber der eingangs beschriebenen bekannten Konstruktion ein verbessertes Ausbringen des Gutes ergibt, zumal durch die horizontale Achsenanordnung der Trommel die Ausbringung des Gutes ohnedies schon gegenüber der bekannten Vorrichtung erleichtert wird, da bei letzterer die Öffnung hochgelagert ist.

In der Zeichnung ist der Erfindungsgegenstand an Hand von Ausführungsbeispielen schematisch veranschaulicht. Fig. 1 zeigt eine Seitenansicht der Vorrichtung, teilweise im Schnitt, bei abgenommenem Deckel. Die Fig.2,3 und 4 zeigen die Hubvorrichtung in drei aufeinanderfolgenden Arbeitsphasen. Fig. 5 zeigt, teilweise im Schnitt, die Hubvorrichtung im Detail. Die Fig.6 und 7 zeigen jeweils im Vertikalschnitt zwei verschiedene Ausführungsformen der Anschlüsse an den Deckel Fig. 8 zeigt ein Detail im Schnitt.

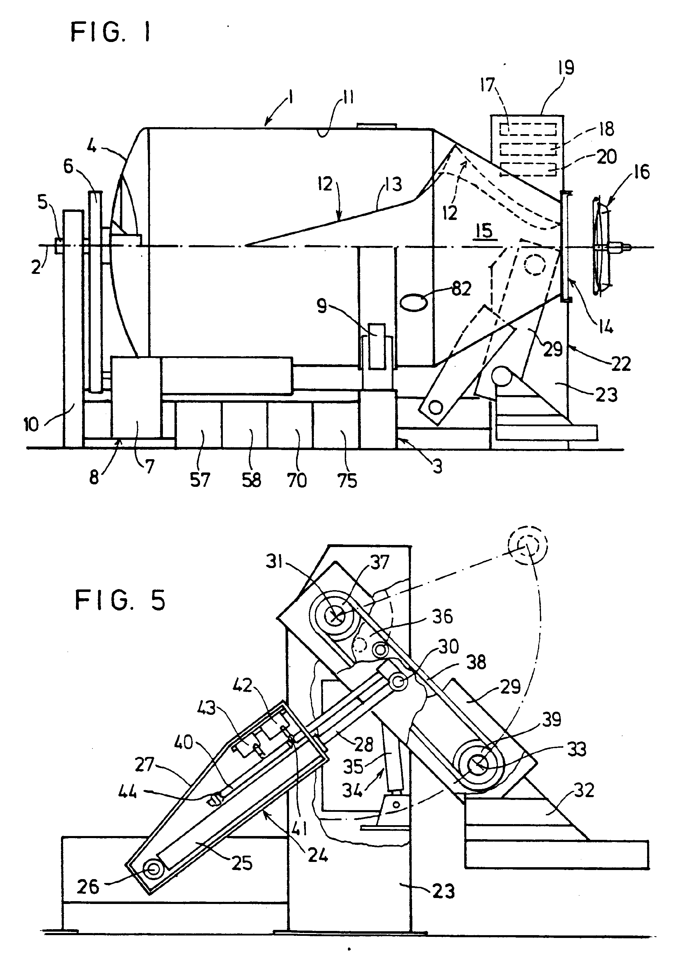

Die Vorrichtung nach Fig.1 hat eine Trommel 1, die mit horizontalliegender Achse 2 in einem Gestell 3 drehbar gelagert ist. Für diese Drehung trägt die Trommel 1 an ihrem Boden 4 einen Antriebszapfen 5, der über einen verschalten Kettentrieb 6 von einem Antrieb 8 angetrieben wird, welcher einen Gleichstrommotor 7 aufweist. Der Gleichstrommotor ist mittels einer Elektronik in seiner Drehzahl stufenlos oder in feinen Stufen, z.B. in sechszehn Stufen, verstellbar und kann hinsichtlich seiner Drehrichtung verändert werden. Die jeweilige Geschwindigkeitsstufe und die Drehrichtung sind im jeweils gewählten Massageprogramm einprogrammiert.

Auf der Gegenseite der Trommel 1 erfolgt die Lagerung mittels zweier im Gestell 3 mittels Kugellagern gelagerter Laufrollen 9, auf welchen die Trommel 1 lose aufliegt. Der Antriebszapfen 5 ist in einem Lagerbock 10 des Gestelles 3 mittels eines Pendellagers gelagert, so daß sich aus der Schweißkonstruktion ergebende Abweichungen von den Sollmaßen aufgenommen werden.

An ihrer Innenwand 11 ist die Trommel 1 mit Vorsprüngen 12 versehen, welche das in die Trommel 1 eingebrachte Gut bei der Drehbewegung der Trommel mitnehmen, eine bestimmte Strecke anheben und dann wieder fallenlassen. Diese Vorsprünge 12 sind von entlang der Innenwand 11 schräg zur Achse 2 verlaufenden Rippen 13 gebildet, welche als Schikanen für das in der Trommel 1 befindliche Gut wirken. Zusätzlich bewirkt die schraubenlinienförmig verlaufende Schrägstellung der die Vorsprünge 12 bildenden Rippen 13 eine Transpartwirkung auf das Gut,so daß das Gut je nach der Drehrichtung der Trommel 1 zum Boden 4 oder von diesem weg in Richtung zu einer für die Ein- ader Ausbringung des Gutes dienenden Öffnung 14 transportiert wird, zu der sich der Mündungsabschnitt 15 der Trommel 1 kegelstumpfförmig verjüngt, wogegen der Hauptabschnitt 1 der Trommel bis zum Boden 4 zylindrisch ist. In der Trommel 1 können mehrere solche Rippen 13, um den Umfang der Trommel verteilt, vorgesehen sein, der Abstand dieser Rippen 13 voneinander muß nicht gleichmäßig sein, um eine intensive Einwirkung auf das zu behandelnde Gut zu bewirken. Wie erwähnt, besteht diese Einwirkung auf das Fleisch einerseits darin, daß das Fleisch hochgehoben wird und wieder zurückfällt, anderseits darin,daß während der Behandlungsphase des Gutes eine Förderung des Fleisches entlang der Behälterwand nach hinten zum Boden 4 zu stattfindet. Der Druck der hiebei auf jene Gutpartien ausgeübt wird, welche entlang des Trommelumfanges liegen, bewirkt, daß im mittleren Teil des Trommelquerschnittes das Gut automatisch wieder nach vorne gedrückt wird. Diese zwei Bewegungskomponenten ergeben zusammen eine schraubenlinienähnliche Bewegung des Gutes entlang der Behälterwand. Vorzugsweise ist die Trommel 1 bis zur Hälfte gefüllt, um ein optimales Resultat zu erzielen. Das Gut fällt hiebei während der Einfüllung nicht aus der Öffnung 14 heraus, da die erwähnte Gutförderung in Richtung zum Boden 4 zu das Gut laufend von der Öffnung 14 abtransportiert, so daß eine Befüllung der Trommel 1 bis zur Hälfte d.h. bis etwa zur Höhe der Achse 2 möglich ist. Eine Überfüllung der Trommel 1 wird jedoch wirksam verhindert.

Zum Verschluß der Öffnung 14 ist ein Deckel 16 vorgesehen, der auf die Öffnung 14 dichtend aufsetzbar ist, so daß zur Unterstützung des Massagevorganges in der Trommel 1 ein Vakuum gezogen werden kann oder gegebenenfalls auch ein Überdruck erzeugt werden kann. Auf diese Weise kann der Massagevorgang auf das zu behandelnde Gut entweder unter normalem Luftdruck oder unter Vakuum oder in einem Impulsbetrieb erfolgen, bei welchem abwechselnd Vakuum gezogen, sodann belüftet, dann wieder Vakuum gezogen und wieder belüftet wird, usw., wobei die Belüftung sowohl einen vom Maximalvakuumwert abweichenden Vakuumwert bedeuten kann (also eine Absenkung des Vakuums), als auch Normaldruck als auch Überdruck. Diese wechselnden Druckverhältnisse in der Trommel 1 bewirken eine Verbesserung der Aufnahme einer Behandlungsflüssigkeit durch das zu behandelnde Gut, insbesondere Pökellake ad.dgl. Zusätzlich hiezu kann eine Einblasung eines Gases in die Trommel 1 erfolgen, z.B. $CO_2$, Stickstoff oder eine Mischung aus diesen Gasen bzw. mit anderen geeigneten Behandlungsgasen. Dieses Gas ersetzt dann die in der Trommel 1 befindliche Luft und hat für die Produktverarbeitung wesentliche Vorteile hinsichtlich der Haltbarkeit, des Aussehens der Oberfläche (insbesondere der Farbe) usw. Die Zugabe von Behandlungsflüssigkeit, insbesondere Salzlake (Lösung von Salz in Wasser, gegebenenfalls unter Zusatz von Gewürzen) kann gleichfalls durch den Deckel 16 hindurch erfolgen. Das Mengenverhältnis von zu behandelndem Gut zu Behandlungsflüssigkeit hängt von der Art des zu behandelnden Gutes ab, es beträgt z.B. 10% Flüssigkeit bezogen auf das Trockengewicht. Die Behandlungsflüssigkeit wird bei geeignet gewählten Massageprogramm in das Fleisch einmassiert, d.h. das Fleisch bzw. Fleischprodukt nimmt die Behandlungsflüssigkeit auf, wodurch ebenfalls eine Gewichtssteigerung und eine Qualitätsverbesserung des behandelten Gutes entsteht.

Zusätzlich oder alternativ hiezu kann eine Beeisung des zu behandelnden Gutes, z.B. mit Kohlensäureschnee, stattfinden, um das im Behälter befindliche Behandlungsgut zu kühlen.

Die für die Einleitung der Behandlungsflüssigkeit bzw. des Gases bzw. des Beeisungsmittels nötigen Einrichtungen werden später beschrieben, desgleichen die zur Erzielung des Vakuums bzw. Überdruckes in der Trommel 1 nötigen Einrichtungen.

Die gesamte Anlage wird über eine Computeranlage gesteuert, welche als Doppelcomputer ausgeführt ist. Der erste Computer regelt hiebei die Bewegung bzw. den Bewegungsablauf der Trommel 1. Hiezu kann in seine Speicher einprogrammiert werden die Arbeitszeit (das ist die Zeit, während welcher sich die Trommel dreht), weiters die Pausenzeit (das ist die Zeit, in welcher die Trommel 1 stillsteht) und schließlich die Gesamtmassagezeit (das ist die Gesamtzeit aller Arbeits- und Pausenzeiten). Zugleich besteht die Möglichkeit einer Einprogrammierung einer Geschwindigkeitsstufe bzw. eines Geschwindigkeitsprogrammes und der Drehrichtung (Rechts- oder Linkslauf der Trommel 1). Schließlich besteht die Möglichkeit der Einprogrammierung einer Vorwahlzeit, d.h. einer Stillstandszeit, nach deren Ablauf das Arbeitsprogramm automatisch begonnen wird. Eine solche Vorwahlzeit wird in vorteilhafter Weise am Abend bei Betriebsschluß bzw. am Wochenende eingestellt, damit am nächsten Werktag früh ein kurzes Gesamtmassageprogramm fertig ist und die Arbeiter sofort mit der Entladung des in der Trommel befindlichen, fertig bearbeiteten Gutes beginnen können.

Der zweite Computer regelt den Zustand der Atmosphäre in der Trommel 1. Wie bereits erwähnt, kann in der Trommel 1 ein Vakuum aufgebaut werden, das während der Behandlung des Gutes kontinuierlich oder impulsweise abwechselnd mit Normaldruck oder Überdruck aufrechterhalten wird, wobei die Vakuumhöhe und auch die Überdruck-höhe nicht stets gleich sein müssen. Es ist daher eine Bearbeitung (Arbeitszeit, siehe oben) bei Dauervakuum möglich, ebenso bei Impulsbetrieb (Vakuum abwechselnd mit Belüftung) als auch bei Druckbetrieb (Überdruck in der Trommel). Weiters regelt dieser Computer die Zugabe eines oder mehrerer gasförmiger Behandlungsmedien, wie z.B. $CO_2$, Stickstoff od.dgl.

Es ist zweckmäßig, alle diese Betriebsvorgänge mit Nummern programmierbar zu machen. Ebenso ist die Programmierung der Zeitintervalle möglich, mit welchen zwischen Vakuumbetrieb und Belüftung oder Begasung oder Druckbetrieb abgewechselt wird.

In der Praxis hat sich eine Ausstattung beider Computer mit je etwa 40 Programmen als zufriedenstellend erwiesen. Ferner ist es zweckmäßig, zusätzlich ein Handprogramm vorzusehen, womit die erwähnten Faktoren auch händisch gesteuert werden können. Die einzelnen, im Computer gespeicherten Programme können miteinander verkettet werden, so daß durch die Verkettung, d.h. automatische Aneinanderreihung verschiedener Programme, ein Summenprogramm beliebiger Art erzielt wird. Dadurch wird größte Vielfalt hinsichtlich der Variationsmöglichkeiten erzielt, so daß man sich auf jeden vorliegenden Behandlungsfall genau einstellen kann.

Ein wesentlicher Vorteil einer solchen Computersteuerung des Behandlungsablaufes besteht darin, daß bei großen Trommelinhalten (z.B. etwa 6000 Liter, was einer Fleischfüllung von etwa 3000 kg entspricht), die Bedienungsperson nur mehr das richtige Programm mit der zugehörigen Nummer wählen muß und sodann die Massageanlage komplett automatisch gesteuert wird, so daß keine Bearbeitungsfehler auftreten können.

Beide Computer 17,18 (Fig.1) sind zweckmäßig in einem gemeinsamen Gehäuse 19 so angeordnet, daß die händischen Arbeitsvorgänge an der Trommel 1 nicht gestärt werden, d.h. zweckmäßig im Bereiche der Öffnung 14 der Trommel 1, also an der Vorderseite der Trommel in der Nähe einer Hubvorrichtung 22, die von einem Steher 23 getragen wird. Das Gehäuse 19 kann als oben am Steher 23 vorgesehener Ansatz ausgebildet sein. Auf diese Weise sind die Computer stets direkt im Blickfeld der Bedienungsperson, was für Bedienung, Kontrolle und Handling optimal ist. Dieses Gehäuse 19 kann auch zugleich einen Steuerkasten 20 für die Steuerung einer Beeisungsanlage enthalten. Mittels einer Beeisung kann das bearbeitete Gut in der Trommel 1 während des Bearbeitungsvorganges gekühlt werden. Die Beeisung kann z.B. durch Einblasen von Kohlensäure erfolgen, welche in der Trommel 1 Kohlensäureschnee bildet und somit das behandelte Gut abkühlt. Hiebei ist darauf zu achten, daß bei einem Massagebetrieb mit Beeisung die Trommel 1 nur zu einem geringen Teil gefüllt werden darf, da sich das Beeisungsgas beim Einsprühen frei im Hohlraum der Trommel 1 entfalten können muß und nicht auf Stücke des zu behandelnden Gutes auftreffen darf. Mittels des Steuerkastens 20 kann die zeitlich eingesprühte Kühlgasmenge dosiert werden. Die Zeiteinstellung erfolgt zweckmäßig über ein Potentiometer und die Einsprühung wird durch Tastendruck ausgelöst. Die Beeisung kann auch in die erwähnten Programme für die Computer 17,18 eingebaut werden, sie kann jedoch auch davon unabhängig sein.

Die für die beschriebenen Bearbeitungsvorgänge nötigen Anschlüsse werden später näher beschrieben.

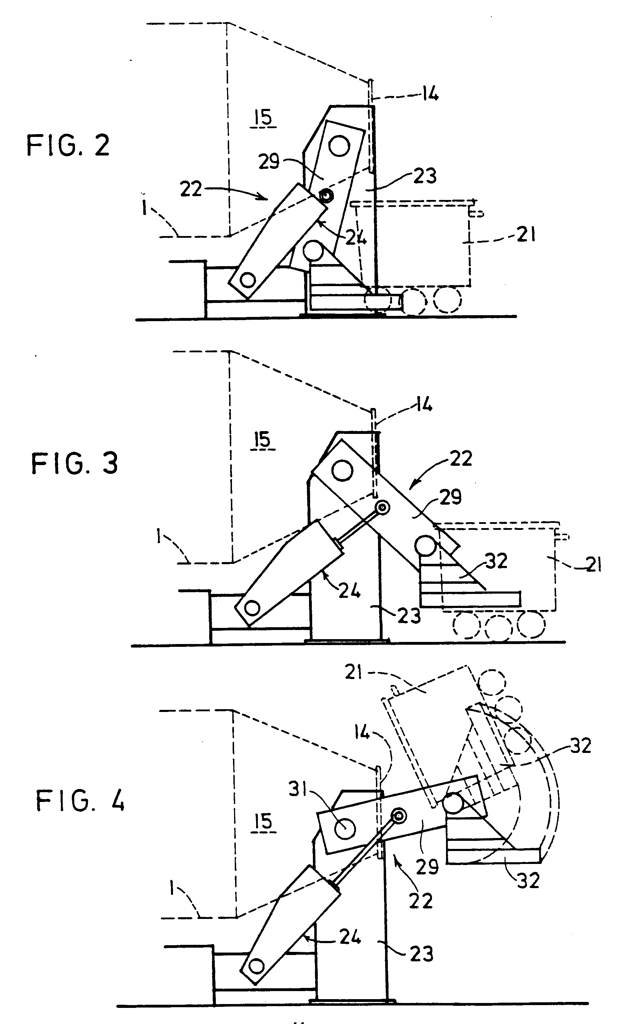

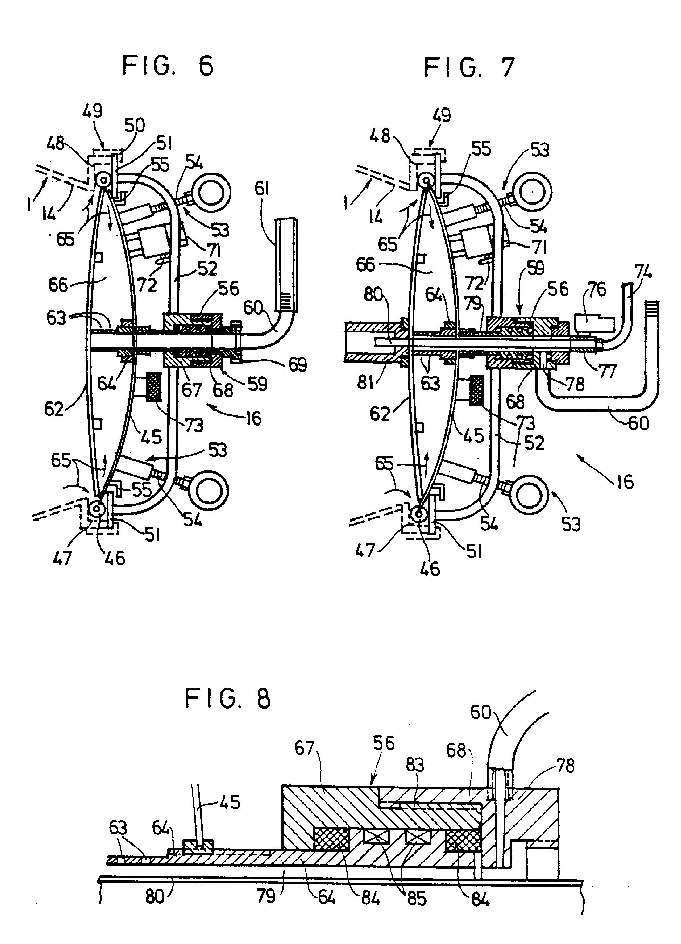

Zweckmäßig wird das zu behandelnde Gut in einem Beschickungswagen 21 (Fig.3,4), vorzugsweise in einem Standard-Normwagen, z.B. einem 200 Liter-Wagen, der Vorrichtung zugeführt bzw. von dieser abgeführt. Insbesondere der mit Gut befüllte Normwagen ist zu schwer, um ihn händisch zur Öffnung 14 anheben und das zu behandelnde Gut in die graßräumige Trommel 1 einleeren zu können. Es ist daher eine Hubvorrichtung 22 für die Anhebung des Beschickungswagens 21 vorgesehen. Diese Hubvorrichtung 22 ist in ihrer abgesenkten Endlage, welche in Fig.2 dargestellt ist, so angeordnet, daß sie zumindest im wesentlichen unter dem die Öffnung 14 aufweisenden Mündungsabschnitt 15 der Trommel 1 liegt und auf diese Weise keinen Platz verstellt. In dieser Position befindet sich die Hubvorrichtung 22, wenn die Vorrichtung nicht in Betrieb ist oder im bereits befüllten Zustand der Trommel 1 das Massageprogramm abläuft oder wenn die Trommel 1 entleert wird. Der Beschickungswagen 21 findet dabei neben einem Steher 23 der Hubvorrichtung 22 Platz, welcher zur einen Seite des Mündungsabschnittes 15 der Trommel 1 angeordnet ist und zweckmäßig einen Teil des gesamten Vorrichtungsgestelles 3 bildet. Soll nun die Trommel 1 mit dem Inhalt des Beschickungswagens 21 beschickt werden, so wird die Hubvorrichtung 22 eingeschaltet und es wird dadurch eine Hydraulik 24 in Tätigkeit gesetzt, welche einen Hydraulikzylinder 25 (Fig.5) aufweist, der mit seinem einen Ende mittels eines Gelenkes 26 am Gestell 3 schwenkbar gelagert ist und von einem Gehäuse 27 umgeben ist, das die Schwenkbewegung des Zylinders 25 mitmacht. Die aus dem Zylinder 25 ausfahrbare Kolbenstange 28 ist mittels eines Gelenkes 30 an einem Arm 29 angelenkt, welcher um eine Schwenkachse 31 am Steher 23 schwenkbar befestigt ist. Am freien Ende des Armes 29 ist eine Gabel 32 für den Beschickungswagen 21 um eine Achse 33 schwenkbar angelenkt, zu deren Verschwenkung relativ zum Arm 29 eine weitere Hydraulik 34 (Fig.5) vorgesehen ist, die einen Hydraulikzylinder 35 hat, dessen Kolbenstange mit einem Drehhebel 36 gelenkig verbunden ist, der eine die Schwenkachse 31 bildende Welle verdreht, auf der ein Kettenrad 37 befestigt ist, das über eine Kette 38 ein weiteres Kettenrad 39 verdreht, das über eine die Achse 33 bildende Welle die Gabel 32 zur Schwenkung um den Arm 29 mitnimmt. Die Hydraulikzylinder 25,35 werden hiebei über Magnetventile gesteuert und über ein gemeinsames Hydraulikaggregat betätigt.

Zur Beschickung wird die Hubvorrichtung 22 durch Betätigung eines Bedienungsknopfes ausgelöst und von der in Fig.2 dargestellten Ruhestellung zunächst in die in Fig.3 dargestellte Stellung gebracht, in welcher der Arm 29 und die an ihm befestigte Gabel 32 durch die Hydraulik 24 so weit ausgefahren sind, daß der Beschickungswagen 21 in die Gabel 32 eingefahren werden kann. Die Erreichung dieser Mittelstellung wird durch eine Steuerstange 40 (Fig.5) abgefühlt, die eine Ausnehmung 41 hat, in die ein Mikroschalter 42 einrastet, sobald der Arm 29 bzw. die Gabel 32 die in Fig.3 dargestellte Einfahr- bzw. Ausfahrstellung für den Beschickungswagen 21 erreicht haben. Soll nun der in die Gabel 32 eingefahrene, mit dem zu behandelndem Gut gefüllte Beschickungswagen 21 gehoben werden, so wird die Hubvorrichtung 22 erneut betätigt, so daß die Kolbenstange 28 aus dem Hydraulikzylinder 25 weiter ausgefahren wird, bis ein weiterer Mikroschalter 43 durch einen auf der Steuerstange 40, vorzugsweise einstellbar, befestigten Anschlag 44 betätigt wird. Dies geschieht dann, wenn der Arm 29 bzw. die Gabel 32 die in Fig.4 mit vollen Linien dargestellte Lage erreicht haben. Zugleich mit der Abschaltung der Schwenkbewegung des Armes 29 löst der Mikroschalter 43 die Betätigung des weiteren Hydraulikzylinders 35 (Fig.5) aus, so daß der Drehhebel 36 um die Schwenkachse 31 verschwenkt wird und über die Kette 38 die Gabel 32 in die in Fig.4 strichliert dargestellte Entleerstellung verschwenkt. Geeignete Anschläge am Beschickungswagen 21 verhindern hiebei, daß dieser Wagen von der Gabel 32 abgleitet. Das aus dem Beschickungswagen 21 herausrutschende Gut fällt in einen Trichter bzw. auf ein nicht dargestelltes Rutschblech und gelangt von diesem durch die Öffnung 14 in die Trommel 1.

Die Absenkung des Beschickungswagens 21 bzw. die Rückführung der Hubvorrichtung in die in Fig.2 dargestellte Ausgangslage erfolgt in der umgekehrten Reihenfolge.

Statt einer solchen Hubvorrichtung 22 kann auch eine andere Vorrichtung zur Beschickung der Trommel 1 vorgesehen sein, z.B. ein Förderband.

In den Fig.6,7 und 8 sind der Deckel 16, seine Befestigungsvorrichtung sowie die Anschlüsse für die Evakuierung, die Begasung bzw. Beeisung sowie für die Einleitung einer Behandlungsflüssigkeit dargestellt. Der Deckel 16 nach Fig.6 besteht aus einer von einer federnden Stahlplatte gebildeten Deckelscheibe 45, die kreisrund ausgebildet und an ihrem Rand mit einem Dichtungsgummi 46 versehen ist, der in eine Ringnut 47 eingelegt werden kann, die in einem an die Öffnung 14 angesetzten Ansatzstück 48 ausgebildet ist. Am Rand ist dieses Ansatzstück mit Verbindungsgliedern 49 versehen, die zum druckdichten Anschluß des Deckels 16 dienen. Hierzu haben die Verbindungsglieder 49 über ihren Umfang verteilte hakenförmige Einhängelaschen nach Art eines Bajonettverschlusses 50, in den eine Ringscheibe 51, die an ihrem Rand ebenfalls bajonettverschlußartig ausgebildet ist, einsetzbar ist und durch Verdrehen eingerastet wird. Die Ringscheibe 51 trägt einen Bügel 52, der seinerseits eine Spannvorrichtung 53 trägt, die den Verbindungsgliedern 49 zugeordnet ist. Die Spannvorrichtung 53 hat zwei in den Bügel 52 eingeschraubte Spannschrauben 54, die sich mit ihren Enden an der Deckelscheibe 45 abstützen und bei ihrem Anziehen den Dichtungsgummi 46 gegen die Wände der Ringnut 47 pressen. Zwar wird, wenn in der Trommel 1 ein Vakuum gezogen wird, der Rand der Deckelscheibe 45 bzw. der Dichtungsgummi 46 automatisch in dichtende Anlage an den Rand der Öffnung 14 gedrückt, jedoch sind die Spannschrauben 54 nötig, um auch einen Betrieb ohne Vakuum oder einen impulsmäßigen Betrieb zwischen Vakuum und Belüftung bzw, Überdruck bei dichtem Verschluß der Trommel 1 durchführen zu können.

An der Deckelscheibe 45 sind Laschen 55 befestigt, die den Innenrand der Ringscheibe 51 übergreifen und derart verhindern, daß nach Lösen der Spannvorrichtung 53 sich die Deckelscheibe 45 vom Bügel 52 völlig lösen kann.

Im Zentrum des Deckels 16 ist eine Drehkupplung 56 vorgesehen, welche einen Teil eines Anschlusses 59 für eine Impulsvakuumanlage 57 (Fig.1) bzw, für eine Überdruckeinrichtung 58 bildet, die mit der Drehkupplung 56 über einen Rohrkrümmer 60 und einen Druckschlauch 61 verbunden sind. Mit der Impulsvakuumanlage 57 läßt sich im Inneren der Trommel 1 ein einstellbarer, gegebenenfalls variabler, Unterdruck dauernd oder impulsweise erzeugen. Die Überdruckeinrichtung 58 dient zur Erzeugung eines einstellbaren, gegebenenfalls ebenfalls variablen, Uberdruckes in der Trommel 1. Damit bei der Absaugung keine Gutteile, z.B, Fleischfasern oder Wasser bzw. Lake mitgesaugt werden, ist an der Innenseite der Deckelscheibe 45 ein Innendeckel 62 angebracht, welcher Absaugöffnungen 63 abschirmt, die an einem an die Drehkupplung 56 angeschlossenen, mit der Deckelscheibe 45 verschraubten Rohrstück 64 vorgesehen sind. Der Weg der abgesaugten Luft geht in Richtung der Pfeile 65 über am Rand des Innendeckels 62 vorgesehene Spalte in den Innenraum 66 zwischen Innendeckel 62 und Deckelscheibe 45 und von dort durch die Absaugöffnungen 63 in das Rohrstück 64, welches sich mit der Trommel 1 bei deren Rotation mitdreht. Das Rohrstück 64 ragt in die zweiteilige Drehkupplung 56 hinein, deren beide Teile 67,68 miteinander über ein Gewinde 83 (Fig.8) abgedichtet verbunden sind. Von der anderen Seite ragt der Rohrkrümmer 60 in die Drehkupplung 56 hinein, an der er durch eine mit dem Drehkupplungsteil 68 verschraubte Überwurfmutter 69 (Fig.6) abgedichtet gehalten ist. Auf diese Weise macht der Rohrkrümmer 60 die Trommelbewegung nicht mit, so daß es zu keiner Verwürgung der Druckschläuche 61 kommen kann. Wie Fig.8 im Detail zeigt, sind die beiden im Betrieb stillstehenden, miteinander über das Gewinde 83 verschraubten Drehkupplungsteile 67,68 relativ zum Rohrstück 64 durch Dichtungen 84 abgedichtet und durch Führungen 85 geführt, die in Ringnuten des sich mit der Trommel 1 mitdrehenden Rohrstückes 64 liegen.

Derselbe Druckschlauch 61 dient zur Einleitung von Druckluft aus der Überdruckeinrichtung 58, z.B. einer Druckpumpe, oder auch zür Einleitung eines Gases aus einer Begasungsanlage 70, die ebenso wie die Überdruckeinrichtung 58 und die Impulsvakuumanlage 57 im Gestell 3 der Vorrichtung eingebaut sein kann.

Ferner trägt die Deckelscheibe 45 einen Anschluß 71 für eine nicht dargestellte Leitung, mit welcher Behandlungsflüssigkeit in die Trommel eingefüllt werden kann. Dieser Anschluß 71 ist mit einem Ventil 72 versehen, durch welche ein Luft- oder Gasaustritt bzw. -eintritt in die Trommel 1 nach Abnahme des zur Zuführung der Behandlungsflüssigkeit verwendeten Schlauches vom Anschluß 71 verhindert wird. Diese Schlauchabnahme ist erforderlich, da sich ja der Anschluß 71 mit der Trommel 1 mitdreht.

Weiters trägt die Deckelscheibe 45 zumindest zwei Klemmschrauben 73 als Sicherung für den Bajonettverschluß 50.

Bei der Ausführungsvariante des Deckels 16 nach Fig.7 mündet der Rohrkrümmer 60 nicht axial in die Drehkupplung 56 ein, sondern radial (siehe auch Fig.8). Dies schafft Platz für die axiale Einführung eines Druckschlauches 74, der an eine Beeisungsanlage 75 (Fig.1) angeschlossen ist. Der Anschluß des Druckschlauches 74 erfolgt über ein mit einem Steuerventil 76 (z.B, ein Magnetventil) versehenes Anschlußstück 77 in ähnlicher Weise an die zweiteilige Drehkupplung 56, wie dies in Fig.6 für den Rohrkrümmer 60 dargestellt ist, so daß sich der Druckschlauch 74 nicht mit der Trommelbewegung mitzubewegen braucht. Der Rohrkrümmer 60 mündet in eine radiale Bohrung 78 des außenseitigen Drehkupplungsteiles 68 ein, welche Bohrung 78 mit einem Ringkanal 79 in Verbindung steht, der außen von der Innenwand des Rohrstückes 64 begrenzt ist, innen von einer Lanze 80, die an das Anschlußstück 77 angeschlossen ist, die Deckelscheibe 45 und den Innendeckel 62 durchsetzt und zur Einblasung des Kühlmittels, z.B. $CO_2$ zur Bildung von Kohlensäureschnee, in das Innere der Trommel 1 dient. Zweckmäßig ist die Mündung der Lanze 80 durch einen am Innendeckel 62 befestigten Kragen 81 umgeben, der eine Strahlrichtwirkung hat. Die Lanze 80 dreht sich im Betrieb nicht mit der Trommel mit, der Innendeckel 62 hingegen schon, so daß die Hindurchführung der Lanze 80 durch den Innendeckel 62 bzw. den Kragen 81 als Drehlagerung ausgebildet sein sollte.

Die Steuerung des Steuerventiles 76 kann vom Steuerkasten 20 (Fig.1 aus erfolgen, doch kann dieses Ventil gegebenenfalls auch händisch betätigt werden.

Eine zusätzliche Öffnung 82 (Fig.1) kann im Mantel der Trommel 1 für die Einleitung von Behandlungsflüssigkeit vorgesehen sein. Durch diese Öffnung kann auch vorhandene Behandlungsflüssigkeit aus der Trommel 1 abgeleitet werden. Selbstverständlich ist diese Öffnung 82 mit einem dichten Verschluß versehen.

**Patentansprüche**

1. Vorrichtung zum Massieren von fleischhaltigem oder fleischähnlichem Gut, z.B. Schinken, Einlagen für Würste, Geflügel, Fisch, Fischprodukten usw., mit einer in einem Gestell (3) um eine liegende Achse (2) drehbar gelagerten Trommel (1) und einem Antrieb (8) für diese Drehbewegung, welche Trommel (1) an ihrem einen Stirnende mit einer durch einen Deckel (16) dicht verschließbaren Öffnung (14) zur Ein- oder Ausbringung des Gutes und an ihrer Innenwand (11) mit, insbesondere schraubenlinienförmig verlaufenden, Vorsprüngen (12) versehen ist, welche das Gut bei der Drehbewegung der Trommel (1) mitnehmen, wobei der Deckel (16) mit einem mittigen, mit einer Drehkupplung (56) versehenen Anschluß (59) für eine Leitung zur Erzeugung eines Vakuums bzw. Überdruckes im Innenraum der Trommel (1) und mit Verbindungsgliedern (49) zum druckdichten Verschluß der Öffnung (14) versehen ist, dadurch gekennzeichnet, daß die Verbindungsglieder (49) einen Bajonettverschluß (50) aufweisen, der mit einer Spannvorrichtung (53) kombiniert ist, mit welcher der Rand einer federnd ausgebildeten Deckelscheibe (45) des von der Trommel (1) abnehmbaren Deckels (16) dicht an den Rand der Öffnung (14) anpreßbar ist.

2. Vorrichtung nach Anspruch 1, dadurch gekennzeichnet, daß die Spannvorrichtung (53) einen am Deckel (16) befestigten Bügel (52) hat, an dem sich Spannschrauben (54) abstützen, die auf den Deckel (16) wirken.

3. Vorrichtung nach Anspruch 1 oder 2, dadurch gekennzeichnet, daß an der Drehkupplung (56) ein Anschluß (59) für eine Impulsvakuumanlage (57) bzw. eine Überdruckeinrichtung (58) angeordnet ist.

4. Vorrichtung nach einem der Ansprüche 1 bis 3, dadurch gekennzeichnet, daß der Deckel (16) mit einem Anschluß für eine Begasungsanlage (70) und bzw. oder eine Beeisungsanlage (75) versehen ist.

5. Vorrichtung nach Anspruch 4, dadurch gekennzeichnet, daß der Anschluß für die Begasungsanlage (70) bzw. die Beeisungsanlage (75) eine in der Drehkupplung (56) mittig angeordnete Lanze (80) aufweist.

6. Vorrichtung nach einem der Ansprüche 1 bis 5, dadurch gekennzeichnet, daß der Deckel (16) mit zumindest einem Anschluß (71) für eine Behandlungsflüssigkeit, insbesondere Salzlake, versehen ist.

7. Vorrichtung nach einem der Ansprüche 1 bis 6, dadurch gekennzeichnet, daß für die Steuerung der Bewegung der Trommel (1) und für die Steuerung der Atmosphäre in der Trommel (1) gesonderte Steueranlagen, insbesondere mit wählbaren Programmen versehene Computer (17,18), vorgesehen sind.

8. Vorrichtung nach einem der Ansprüche 1 bis 7, dadurch gekennzeichnet, daß an der Innenseite des Deckels (16) ein Innendeckel (62) angebracht ist, der Absaugöffnungen (63) eines den Deckel (16) durchsetzenden Kanales (79) abschirmt.

9. Vorrichtung, nach einem der Ansprüche 1 bis 8, dadurch gekennzeichnet, daß eine Hubvorrichtung (22) für die Anhebung eines Beschickungswagens (21) zur Öffnung (14) der Trommel (1) vorgesehen ist, welche Hubvorrichtung (22) in ihrer abgesenkten Endlage zumindest im wesentlichen unter dem die Öffnung (14) aufweisenden Mündungsabschnitt (15) der Trommel (1) liegt.

10. Vorrichtung nach Anspruch 9, dadurch gekennzeichnet, daß die Hubvorrichtung (22) zumindest einen am Gestell (3) angelenkten und durch eine Hydraulik (24) verschwenkbaren Arm (29) hat, an dessen freiem Ende eine durch eine weitere Hydraulik (34) relativ zum Arm (29) verschwenkbare Gabel (32) für den Beschickungswagen (21) angelenkt ist.

11. Vorrichtung nach einem der Ansprüche 1 bis 10, dadurch gekennzeichnet, daß die Achse (2) der Trommel (1) horizontal liegt.

**Claims**

1. A device for massaging meat-containing or meat-like matter, e.g. ham, fillings for sausages, poultry, fish, fish products, etc., having a drum (1) mounted in a frame (3) so as to rotate about a horizontal axis (2) and having a drive (8) for this rotating movement, which drum (1) is provided at one of its end faces with an opening (14) for introducing or extracting the matter, the said opening (14) being closable in a sealed manner by means of a cover (16), and provided on its inner wall (11) with projections (12), extending helically in particular, which carry the matter along during the rotating movement of the drum (1), wherein the cover (16) is provided with a central connection (59), being provided with a revolving coupling (56), for a line for generating a vacuum or excess pressure in the interior of the drum (1) and with connecting elements (49) for the pressure-tight closure of the opening (14), characterised in that the connecting elements (49) have a bayonet catch (50) which is combined with a clamping device (53), by means of which the edge of a resiliently formed cover disc (45) of the cover (16), which is detachable from the drum (1), can be sealingly pressed against the edge of the opening (14).

2. A device according to claim 1, characterised in that the clamping device (53) has a bracket (52) fastened to the cover (16), on which bracket (52) tightening screws (54) are supported which act on the cover (16).

3. A device according to claim 1 or 2, characterised in that a connection (59) for a pulse vacuum installation (57) or an excess pressure appliance (58) is arranged on the revolving coupling (56).

4. A device according to any one of claims 1 to 3, characterised in that the cover (16) is provided with a connection for a gas absorption installation (70) and/or an icing installation (75).

5. A device according to claim 4, characterised in that the connection for the gas absorption installation (70) or the icing installation (75) has a lance (80) arranged centrally in the revolving coupling (56).

6. A device according to any one of claims 1 to 5, characterised in that the cover (16) is provided with at least one connection (71) for a treatment liquid, particularly brine.

7. A device according to any one of claims 1 to 6, characterised in that separate control installations, particularly computers (17, 18) provided with selectable programs, are provided for controlling the movement of the drum (1) and for controlling the atmosphere in the drum (1).

8. A device according to any one of claims 1 to 7, characterised in that an inner cover (62) is attached to the inside of the cover (16), which inner cover (62) protects suction openings (63) of a conduit (79) penetrating the cover (16).

9. A device according to any one of claims 1 to 8, characterised in that a lifting device (22) is provided for raising a charging wagon (21) towards the opening (14) of the drum (1), which lifting device (22) in its lowered end position lies at least substantially below the outlet portion (15) of the drum (1), the said outlet portion (15) having the opening (14).

10. A device according to claim 9, characterised in that the lifting device (22) has at least one arm (29) articulated on the frame (3) and tiltable by means of a hydraulic mechanism (24), on the free end of which arm (29) a fork (32) for the charging wagon (21) is articulated, the said fork (32) being tiltable in relation to the arm (29) by means of a further hydraulic mechanism (34).

11. A device according to any one of claims 1 to 10, characterised in that the axis (2) of the drum (1) lies horizontally.

**Revendications**

1. Dispositif pour le massage de matières contenant de la viande ou analogues à de la viande, comme par exemple du jambon, des produits pour remplir des saucisses, de la volaille, du poisson, des produits à base de poisson, etc., comprenant un tambour (1) monté dans un bâti (3) en pouvant tourner autour d'un axe couché (2) et un entraînement (8) pour ce déplacement en rotation, lequel tambour (1) est muni, à l'une de ses extrémités frontales, d'une ouverture (14) qui peut être fermée de manière étanche par un couvercle (16) et qui est destinée au chargement et au déchargement des matières, et, sur sa paroi intérieure (11), de saillies (12) qui s'étendent en particulier en forme d'hélices et qui entraînent les matières lors du déplacement en rotation du tambour (1), cependant que le couvercle (16) est muni d'un raccordement central (59) muni d'un joint tournant (56) pour un conduit destiné à engendrer un vide ou une surpression, respectivement, dans le volume intérieur du tambour (1), ainsi que d'organes de liaison (49) destinés à fermer l'ouverture (14) de manière étanche à la pression, caractérisé par le fait que les organes de liaison (49) comportent une fermeture à baïonnette (50) qui est combinée à un dispositif de serrage (53) au moyen duquel le bord d'un disque de couvercle réalisé élastiquement (45) du couvercle (16) qui peut être retiré du tambour (1) peut être serré de manière étanche contre le bord de l'ouverture (14).

2. Dispositif selon la revendication 1, caractérisé par le fait que le dispositif de serrage (53) comporte un étrier (52) qui est fixé au couvercle (16) et sur lequel s'appuient des vis de serrage (54) agissant sur le couvercle (16).

3. Dispositif selon la revendication 1 ou 2, caractérisé par le fait qu'un raccordement (59) destiné à une installation de mise sous vide par impulsions (57) ou à un dispositif de surpression (58), respectivement, est disposé sur le joint tournant (56).

4. Dispositif selon l'une des revendications 1 à 3, caractérisé par le fait que le couvercle (16) est muni d'un raccordement destiné à une installation de gazage (70) et à une installation de givrage (75), ou à celle-ci, respectivement.

5. Dispositif selon la revendication 4, caractérisé par le fait que le raccordement destiné à l'installation de gazage (70) ou à l'installation de givrage (75), respectivement, comporte une lance (80) disposée centralement dans le joint tournant (56).

6. Dispositif selon l'une des revendications 1 à 5, caractérisé par le fait que le couvercle (16) est muni d'au moins un raccordement (71) destiné à un liquide de traitement, et en particulier à de la saumure.

7. Dispositif selon l'une des revendications 1 à 6, caractérisé par le fait qu'il est prévu, pour la commande du déplacement du tambour (1) et pour la commande de l'atmosphère dans le tambour (1), des installations de commande séparées, et en particulier des ordinateurs (17, 18) pourvus de programmes pouvant être sélectionnés.

8. Dispositif selon l'une des revendications 1 à 7, caractérisé par le fait qu'un couvercle intérieur (62) est monté sur le côté intérieur du couvercle (16) pour protéger des orifices d'aspiration (63) d'un canal (79) qui traverse le couvercle (16).

9. Dispositif selon l'une des revendications 1 à 8, caractérisé par le fait qu'il est prévu un dispositif de levage (22) pour soulever un wagonnet de chargement (21) jusqu'à l'ouverture (14) du tambour (1), ce dispositif de levage (22), dans sa position finale abaissée, étant situé, du moins pour l'essentiel, sous la section d'embouchure (15) du tambour (1) qui présente l'ouverture (14).

10. Dispositif selon la revendication 9, caractérisé par le fait que le dispositif de levage (22) comporte au moins un bras (29) qui est articulé sur le bâti (3), qui peut être amené à pivoter par un système hydraulique (24), et à l'extrémité libre duquel est articulée une fourche (32) qui est destinée au wagonnet de chargement (21) et qui peut être amenée à pivoter par rapport au bras (29) au moyen d'un autre système hydraulique (34).

11. Dispositif selon l'une des revendications 1 à 10, caractérisé par le fait que l'axe (2) du tambour (1) est disposé horizontalement.

FIG. 1

FIG. 5

FIG. 2

FIG. 3

FIG. 4

FIG. 6

FIG. 7

FIG. 8